# EUROPEAN PATENT SPECIFICATION

(11) **EP 2 608 311 B1**
(45) Date of publication and mention of the grant of the patent: **21.06.2017**
(21) Application number: 12181032.9
(22) Date of filing: 20.08.2012
(51) Int. Cl.: H01M 10/60

(54) **Battery module**
Batteriemodul
Module de batterie

(30) Priority: 22.12.2011 US 201161579348 P; 13.08.2012 US 201213572816
(43) Date of publication of application: 26.06.2013
(73) Proprietor: Samsung SDI Co., Ltd., Gyeonggi-do (KR); Robert Bosch GmbH, 70442 Stuttgart (DE)
(72) Inventor: CHA, In-Hwan, Gyeonggi-do (KR); SOHN, Kwon, Gyegonggi-do (KR); YANG, Seung-Woo, Gyegonggi-do (KR); MOK, Min-Kyun, Gyegonggi-do (KR)
(74) Representative: Gulde & Partner

(56) References cited:
- EP-A1- 2 343 769
- EP-A2- 2 362 463
- DE-A1-102010 013 025
- DE-A1-102010 029 872

## Description

The present invention relates to a battery module, more particularly to a battery module having improved heat exchanging efficiency.

### DESCRIPTION OF THE RELATED ART

In the recent years, high output battery modules using a non-aqueous electrolyte of high energy density have been developed. The high output battery modules may include a plurality of battery cells connected in series to drive a machine requiring a high power, for example a motor such an electric automobile.

The battery cell generates heat during operation, and when the heat is accumulated, the battery cell may be degraded, and in several cases, a safety problem may occur. Therefore, various studies have been made to control a temperature of the battery cell.

### SUMMARY OF THE INVENTION

According to the present invention there is provided a battery module as described in appendent claim 1. The heat exchanging member may comprise a first distributor including a plurality of openings; and a second distributor including a plurality of openings.

According to another embodiment of the present invention the plurality of tubes is interposed between the first and second distributors and connecting the openings of the first and second distributors, wherein the tubes are being arranged in a second direction perpendicular to the first direction. The first distributor may include an inlet for a heat exchanging medium; and the second distributor may include an outlet for the heat exchanging medium. Further, the first distributor may be provided on the lower member and extends into the first direction; and the second distributor may be provided on the lower member opposite to the first distributor. A size of the tubes corresponds to a size of the bottom surface of the battery cells. The lower member may include a base portion and a pair of supporting portions projected in parallel with the battery cells at opposite sides of the base portion. The tubes may be arranged in parallel each other between the pair of supporting portions. A height of the pair of supporting portions and a height of the first and second distributors may be greater than that of a sum of the tube and upper member.

Preferably, the lower member and/or the upper member are a plate or filler.

The lower member may be made of plastic and/or the upper member may be made of a metal.

The tube may be made of at least one of copper, aluminium, and stainless steel.

Preferably, the tube includes a partition in an inner portion thereof and a plurality of the flowing path formed at the inner portion of the tube by the partition.

According to another aspect of the invention there is provided a battery including at least two of the above battery modules, wherein a connection member is connecting the heat exchange member of a first battery module with heat exchange member of a second battery module.The battery cell may include a cap plate provided with a terminal portion and a bottom surface provided opposite to the cap plate and the heat exchanging member may be provided to support the bottom surface of the battery cell.

The heat exchanging member may include a plurality of tubes provided in parallel each other.

The heat exchanging medium may include at least one of ethylene glycol and propylene glycol as a refrigerant.

The tube may be a parallel flow condenser tube (PFC tube).

### BRIEF DESCRIPTION OF THE DRAWINGS

FIG. 1 is a perspective view showing a battery module according to a preferred embodiment of the present application.
FIG. 2A is a schematic view showing a flowing path of the heat exchanging member of Fig. 1.
FIG. 2B is an exploded perspective view of a heat exchanging member of Fig. 1.
FIG. 3 is a cross sectional view taken along FIG.1.
FIG. 4 is a cross sectional view showing a battery cell and a heat exchanging member according to another embodiment of the present invention.
FIG. 5 is a perspective view of a battery module according to another embodiment of the present invention.
FIG. 6 is an exploded perspective view of FIG.5.
FIG. 7 s an exploded perspective view showing the heat exchanging member of FIG.5.
FIG. 8 is a perspective view for at least one battery module according to another embodiment of the present invention.

### DETAILED DESCRIPTION OF THE INVENTION

The present invention will be described with reference to an accompanying drawing.

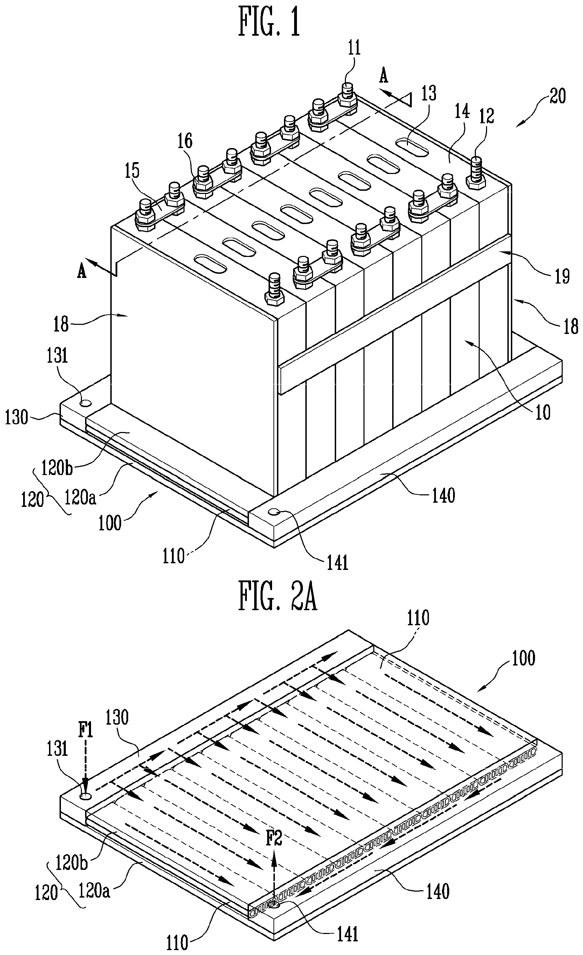

FIG. 1 is a perspective view of a battery module according to a preferred embodiment of the present invention.

The battery module 20 includes a plurality of battery cells 10 connected electrically; a heat exchanging member 100 provided adjacent to the battery cell 10, wherein the heat exchanging member 100 includes at least one tube 110 and a frame 120 covering the tube(s) 110. Each tube 110 has an inner portion forming a plurality of the flowing paths formed by a partition 111.

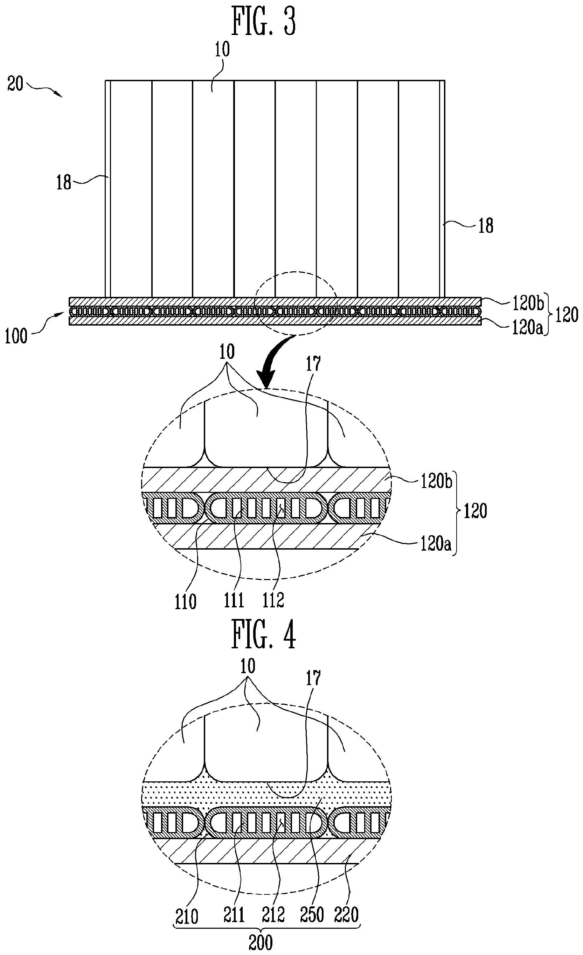

The battery cell 10 includes a cap plate 14 provided with a terminal 11, 12 and a bottom surface 17 provided opposite to the cap plate 14 (see FIG. 3), wherein the heat exchanging member 100 is provided to support the bottom surface of the battery cell 10.

Referring to FIG. 1, the battery cell 10 includes a battery case having a one opened surface, an electrode assembly housed within the battery case and electrolyte. The electrode assembly and the electrolyte generate energy by an electrochemical reaction and the battery case is sealed by the cap plate 14. The cap plate 14 is provided with terminals 11, 12 and a safety vent 13. The cathode terminal 11 and the anode terminal 12 of the adjacent battery cells 110 are electrically connected through a bus bar 15 and the bus bar 15 is fixed to the cathode 11 and the anode 12 with a member such a nut 16 and the like. Plates 18, 19 are used for fixing an alignment of the battery cells 10. The plates 18, 19 are provided to be opposite each other and includes a pair of end plates 18 facing a wide surface of the battery module 20 and a side plates 19 adjacent to a side surface of the battery module 20. The plates 18, 19 are to fix the plurality of battery cells 10 and may be modified in various ways depending on a design of the battery module 20.

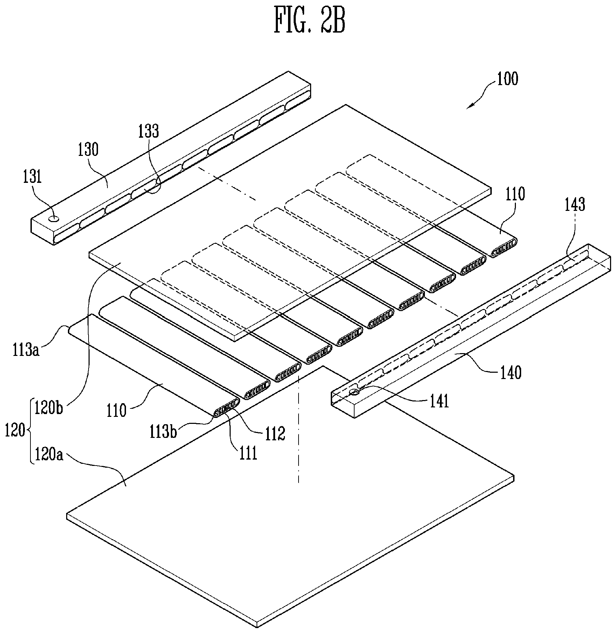

FIG. 2A is a schematic view showing the flowing path of the heat exchanging member 100 and FIG. 2B is an exploded perspective view of the heat exchanging member 100.

Referring to FIG. 2A and FIG. 2B, the heat exchanging member 100 may be provided to support the bottom surface 17 (see FIG. 3) of the battery cells 10. The heat exchanging member 100 may include the frame 120 and a first and a second distributor 130, 140 formed at an outermost surface of the heat exchanging member 100 to wrap a plurality of tubes 110 provided in parallel. The distributor 130 is provided to cover one end 113a of the tubes 110, wherein the inlet 131 into which an heat exchanging medium flows (F1) flows is provided at one side of the first distributor 130 and the second distributor 140 is provided to cover the other end 113b of the tubes 110, wherein the outlet 141 out which the heat exchanging medium flows is provided at one side of the second distributor 140. For example, the heat exchanging medium may be one of ethylene glycol and propylene glycol.

The tubes 110 may be variously formed; a long side portion of the tubes 110 is provided to face each other in parallel and may be supported by the frame 120. Each tube 110 includes a partition in an inner portion thereof and a plurality of the flowing paths 112 are formed at the inner portion of the tube 110 by the partition 111 through which the heat exchanging medium flows. A material of the tube 100 may be one of copper, aluminium, and stainless steel. Preferably, the tube 110 may be a parallel flow condenser tube (PFC tube). The frame 120 is provided at the outmost surface of the heat exchanging member 100 and includes an upper and lower member 120a, 120b. The lower member 120b supports the tubes 110 and the upper member 120a is provide between the tubes 110 and the battery cells 10.

According to the present embodiment, the upper and lower members 120a, 120b are plates.

The lower member 120a is located at the lower portion of the heat exchanging member 110 and the upper member 120b is provided to cover the tubes 110 and abuts on the bottom surface 17 of the battery cell 10. The upper and lower members 120a, 120b protect the tubes 110 and serve to provide a predetermined stiffness of the heat exchanging member 100 to the plurality of battery cells 10. Therefore, a thickness and a material may be appropriately modified in accordance with a use condition and the thickness and the material of the lower member 120a may be provided differently.

The lower member 120a may be made of plastic and the upper member 120b may be made of stainless and the like. The lower member 120a made of the plastic can prevent a heat exchange of the outside caused by a lower insulation effect for the heat exchanging medium.

Whereas, the upper member 120b made of stainless steel has a good heat transfer ability, thereby improving a heat exchanging efficiency between the battery cells 10 and the heat exchanging medium. The heat exchanging medium circulating in the heat exchanging member 100 can perform an exchange heat only for the battery cells 10, thereby improving a heat exchanging efficiency.

The first and second distributors 130, 140 are provided on the lower member 120a and are provided to cover the ends 113a, 113b of the tubes 110. The first distributor 130 is provided with an inlet 131 into which the heat exchanging medium flows F1 and a plurality of first openings 133. In addition, the second distributor 140 is provided with an outlet 141 out which the heat exchanging medium flows F2 and which has a plurality of second openings 143. The first and second distributor 130 and 140 is provided at both ends of the first lower member 120a and the first and second openings 133, 134 are provided to face each other.

The first and second openings 133, 134 provided at the first and second distributors 310, 140 are provided to correspond to one end 113a and other end 113b of the tubes 110. The one end 113a and the other end 113b are connected with the first and second openings 133, 134.

The heat exchanging medium flowing through the inlet 131 of the distributor 130 can flow through the first openings 133 to the flowing paths 112 of each tube 110. The heat exchanging medium passed through the tube 110 is discharged through the second openings 143 of the second distributor 140 and flows out through outlet 141.

In order to control heat of the battery cell, the heat exchanging member is used. As described above, the heat exchanging member includes an upper plate and lower plate and tubes provided to form the cooling path.

The battery module 20 according to the present invention has a reduced volume and weight. Fig.3 is a cross-sectional view taken along A-A of FIG. 1.

The heat exchanging member 100 is provided to support the bottom surface 17 of the battery cells 10, performing heat exchange with the battery cells 10 and thereby controlling a temperature of the battery cells 10. The heat exchanging medium flows into the inlet 131 of the first distributor 130, circulates within the tubes 110 while passing through the tube and is discharged through the outlet 141 provided at the second distributor 140.

The tube 110 may be provided to have a size corresponding to the bottom 17 of the battery cell 10. When the tube 110 and the battery cell 10 are provided to be one to one relation, the battery cell 10 can improve a heat exchanging efficiency.

FIG. 4 is schematic cross-sectional view of the battery cell and the heat exchanging member according to another embodiment of the invention.

Referring to FIG.4, the heat exchanging member 200 is provided to support the bottom surface 17 of the battery cell 10.

The heat exchanging member 200 includes the plurality of tubes 210 provided in parallel each other.

The heat exchanging member 200 further includes a filler 250 as the upper member, wherein the filler 250 is provided between the tubes 210 and the battery cells 10.

In addition, the filler 250 may be also provided to fill the empty space between the lower member of the frame 220 and the tubes 210.

The filler 250 may show elastic behaviour.

In addition, since the filler 250 can fill the empty space provided by a shape between the tube 210 and frame 220, it can improve stiffness of the heat exchanging member 200.

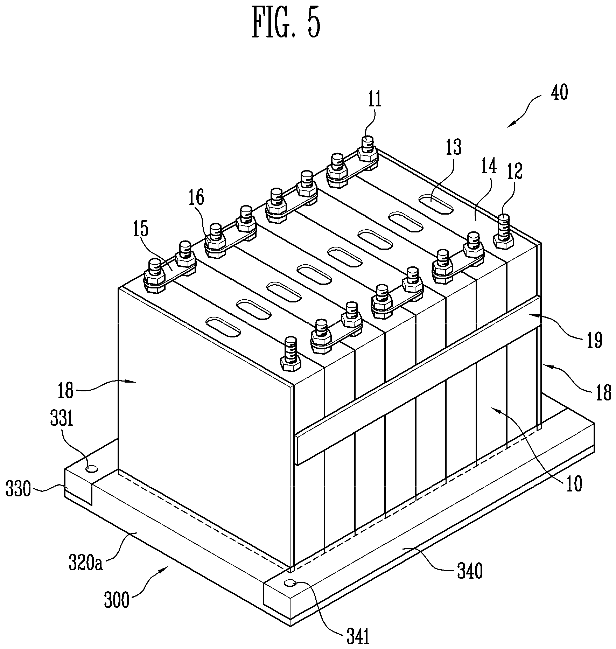

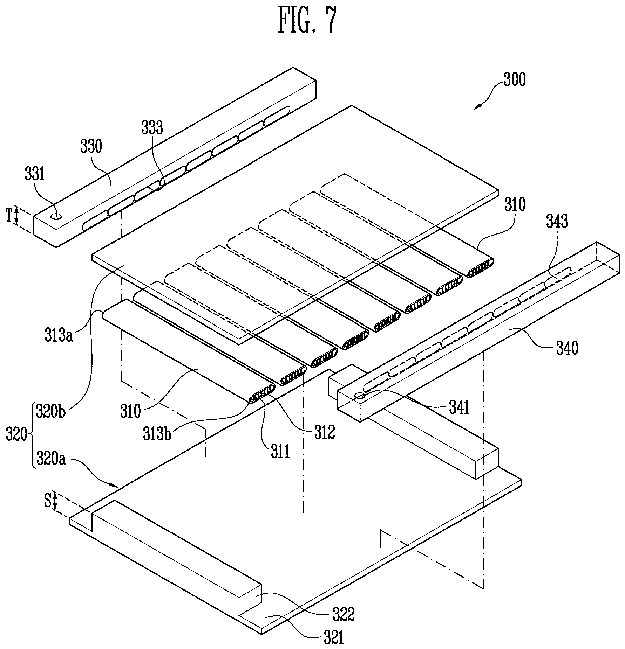

FIG.5 is a perspective view showing the battery module according to another embodiment of the present disclosure, FIG.5 is an exploded perspective of FIG.5 and FIG.7 is an exploded perspective view showing the heat exchanging member of FIG. 5.

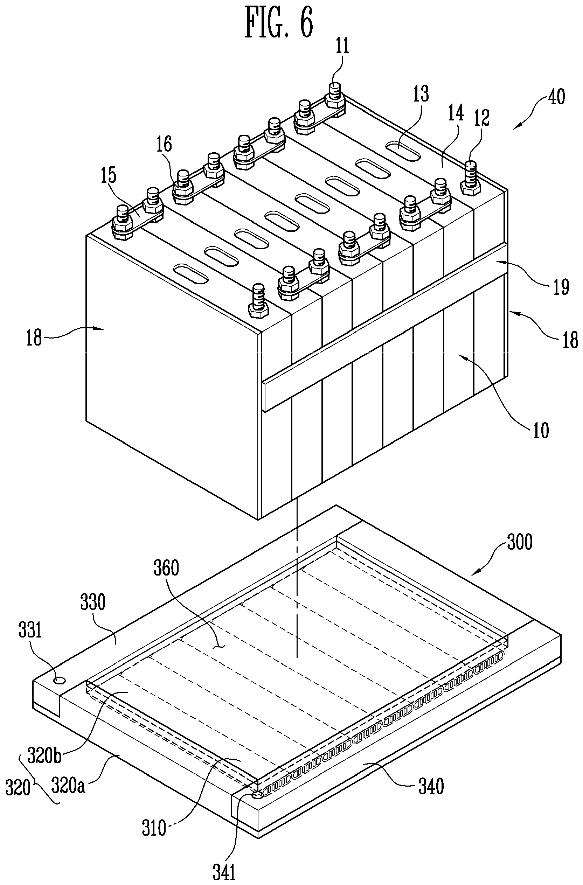

Referring to FIGS. 5 to 7, the battery module 40 according to the embodiment includes the plurality of battery cells 10 and a heat exchanging member 300 adjacent to the plurality battery cell 10, wherein the heat exchanging member 300 includes at least one tube 310, a frame 320 covering the tubes 310 and a first and second distributor 330, 340.

The frame 320 includes a lower member 320a provided to support the tubes 310 and ann upper member 320b provided between the battery cells 10 and the tubes 310.

In the heat exchanging member 300, the first distributor 330 having the inlet 331 and the second distributor 340 having an outlet 341 is provided at both sides on the lower member 320a.

In this case, the first and second distributor 330, 340 is provided such that the first and second openings 333, 343 connected to the one end 313a and the other end 313b of the tubes 310 face each other.

The lower member 320a includes a base portion 321 provided to support the bottom of the battery cells 10 and a pair of supporting portions 322 projected in parallel with the battery cells 10 from the both ends of the base portion 321. The tubes 310 mare arranged in parallel each other between the supporting portions 322.

In addition, the first and second distributors 330, 340 are provided on the lower member 320a, wherein the first and second distributors 330, 340 are provided to abut the supporting portions 322.

That is, the supporting portions 322 are provided in parallel in the alignment direction of the tubes 322, the first and second distributors 330, 340 are provided such that the first and second openings 333, 343 combine with the one end 313a and the other end 313b of the tubes 310 and the supporting portions 322 and the first and second distributor 330, 340 abut vertically on the base portion 321.

A height S of the supporting portions 322 corresponds to a height T of the first and second distributor 330, 340.

The height T of the first and second distributor 330, 340 is greater than that of a sum of a tube 310 and the lower member 320b thereby defining a compartment portion 360, which is a space in which the battery cells 10 are seated.

The compartment portion 360 easily facilitates an alignment of the battery cells 10 and can also fix the battery cells 10 on the heat exchanging member 300.

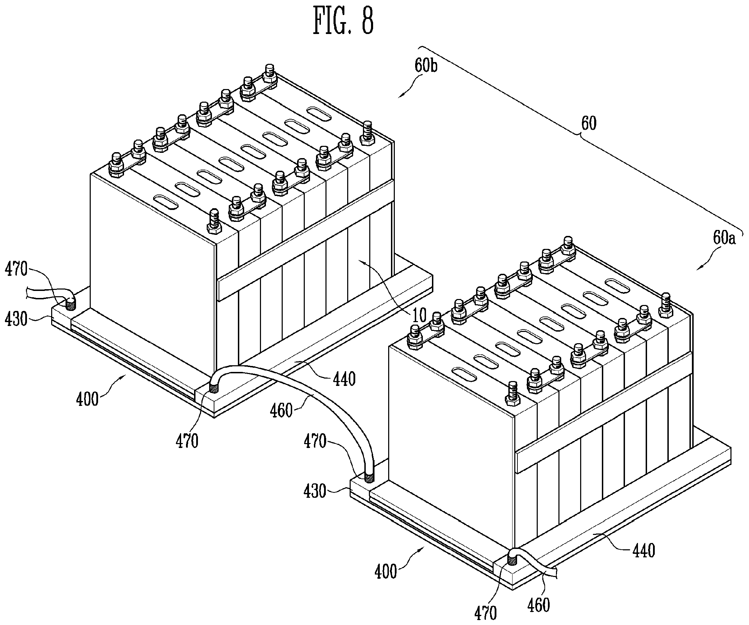

FIG.8 is a perspective view of another embodiment of the present invention.

Referring to FIG.8, the battery module 60 includes two battery modules 60a, 60b.

The first and second battery module 60a, 60b includes a least one of battery cell 10 and the heat exchanging member 400 adjacent to the battery cell 10. The heat exchanging member 400 further includes a first and second distributor 430, 440.

The outlet provided in the second distributor 440 of the first battery module 60a communicates with the inlet of the first distributor 430 of the second battery module 60b by means of a connecting member 460.

In addition, a fastening portion 470 is provided between the inlet/outlet and the connecting member 460.

## Claims

1. A battery module (20) comprising:
a plurality of prismatic battery cells (10) being connected electrically and arranged together in a first direction; and
a heat exchanging member (100, 300) supporting bottom surfaces (17) of the battery cells (10), the heat exchanging member (100, 300) including a lower member (120a, 320a), an upper member (120b, 320b) made of a heat conductive material and facing the bottom surfaces (17) and, for each of the battery cells (10) a corresponding flattened tube (110, 210, 310) interposed between the lower and upper member (120a, 320a; 120b, 320b) and having a upper surface facing the bottom surface of the respective battery cell (10), wherein an area of the upper surface equals the area of the bottom surface of the respective battery cell (10) the bottom surface of the respective battery cell superposing the area of the upper surface.

2. The battery module of claim 1, wherein the heat exchanging member (100, 300) comprises:
a first distributor (130, 330) including a plurality of openings (133, 333); and
a second distributor (140, 340) including a plurality of openings (143, 343).

3. The battery module of claim 2, wherein the plurality of tubes (110, 310) is interposed between the first and second distributors (130, 330; 140, 340) and connecting the openings (133, 333; 143, 343) of the first and second distributors (130, 330; 140, 340), the tubes (110, 310) being arranged in a second direction perpendicular to the first direction.

4. The battery module of claim 2 or 3, wherein
the first distributor (130, 330) includes an inlet (131, 331) for a heat exchanging medium; and
the second distributor (140, 340) includes an outlet (141, 341) for the heat exchanging medium.

5. The battery module of one of claims 2 through 4, wherein
the first distributor (130, 330) is provided on the lower member (120a) and extends into the first direction; and
the second distributor (140, 340) is provided on the lower member (120a) opposite to the first distributor (130, 330).

6. The battery module of any of the preceding claims, wherein the lower member (320a) includes a base portion (321) and a pair of supporting portions (322) projected in parallel with the battery cells (10) at opposite sides of the base portion (321).

7. The battery module of claim 6, wherein the tubes (310) are being arranged in parallel each other between the pair of supporting portions (322).

8. The battery module of claim 6 or 7, wherein a height (S) of the pair of supporting portions (322) and a height (T) of the first and second distributors (330, 340) is greater than that of a sum of the tube (310) and upper member (320b).

9. The battery module of any of the preceding claims, wherein the lower member (120a, 320a) and/or the upper member (120b, 320b) is a plate or a filler (250).

10. The battery module of any of the preceding claims, wherein the lower member (120a, 320a) is made of plastic and/or the upper member (120b, 320b) is made of a metal.

11. The battery module of any of the preceding claims, wherein the tube (110, 310) is made of at least one of copper, aluminum, and stainless steel.

12. The battery module of any of the preceding claims, wherein the tube (110) includes a partition (111) in an inner portion thereof and a plurality of the flowing path (112) formed at the inner portion of the tube (110) by the partition (111).

13. A battery including at least two battery modules (60a, 60b) according to one of claims 1 through 9, wherein a connection member (460) is connecting the heat exchange member of a first battery module (60a) with heat exchange member of a second battery module (60b).

## Patentansprüche

1. Batteriemodul (20), aufweisend:
eine Vielzahl prismatischer Batteriezellen (10), die elektrisch miteinander verbunden sind und zusammen in einer ersten Richtung angeordnet sind; und
ein Wärmeaustauschelement (100, 300), das Unterseiten (17) der Batteriezellen (10) stützt, wobei das Wärmeaustauschelement (100, 300) ein unteres Element (120a, 320a), ein oberes Element (120b, 320b), das aus einem wärmeleitenden Material besteht und den Unterseiten (17) zugewandt ist, und für jede der Batteriezellen (10) ein entsprechendes abgeflachtes Rohr (110, 210, 310), das zwischen dem unteren und oberen Element (120a, 320a; 120b, 320b) angeordnet ist und eine Oberseite, die der Unterseite der jeweiligen Batteriezelle (10) zugewandt ist, aufweist, aufweist, wobei eine Fläche der Oberseite gleich der Fläche der Unterseite der jeweiligen Batteriezelle (10) ist, wobei die Unterseite der jeweiligen Batteriezelle die Fläche der Oberseite überlagert.

2. Batteriemodul nach Anspruch 1, wobei das Wärmeaustauschelement (100, 300) aufweist:
einen ersten Verteiler (130, 330), der eine Vielzahl von Öffnungen (133, 333) aufweist; und
einen zweiten Verteiler (140, 340), der eine Vielzahl von Öffnungen (143, 343) aufweist.

3. Batteriemodul nach Anspruch 2, wobei die Vielzahl der Rohre (110, 310) zwischen dem ersten und zweiten Verteiler (130, 330; 140, 340) angeordnet ist und die Öffnungen (133, 333; 143, 343) des ersten und zweiten Verteilers (130, 330; 140, 340) miteinander verbindet, wobei die Rohre (110, 310) in einer zweiten Richtung perpendikulär zur ersten Richtung angeordnet sind.

4. Batteriemodul nach Anspruch 2 oder 3, wobei
der erste Verteiler (130, 330) einen Einlass (131, 331) für ein Wärmeaustauschmedium aufweist; und
der zweite Verteiler (140, 340) einen Auslass (141, 341) für das Wärmeaustauschmedium aufweist.

5. Batteriemodul nach einem der Ansprüche 2 bis 4, wobei
der erste Verteiler (130, 330) auf dem unteren Element (120a) bereitgestellt wird und sich in die erste Richtung erstreckt; und
der zweite Verteiler (140, 340) auf dem unteren Element (120a) gegenüber dem ersten Verteiler (130, 330) bereitgestellt wird.

6. Batteriemodul nach einem der vorhergehenden Ansprüche, wobei das untere Element (320a) einen Basisabschnitt (321) und ein Paar Stützabschnitte (322), die an gegenüberliegenden Seiten des Basisabschnitts (321) parallel zu den Batteriezellen (10) vorstehen, aufweist.

7. Batteriemodul nach Anspruch 6, wobei die Rohre (310) parallel zueinander zwischen dem Paar von Stützabschnitten (322) angeordnet sind.

8. Batteriemodul nach Anspruch 6 oder 7, wobei eine Höhe (S) des Paars von Stützabschnitten (322) und eine Höhe (T) des ersten und zweiten Verteilers (330, 340) größer als diejenige einer Summe des Rohrs (310) und des oberen Elements (320b) sind.

9. Batteriemodul nach einem der vorhergehenden Ansprüche, wobei das untere Element (120a, 320a) und/oder das obere Element (120b, 320b) eine Platte oder ein Füllmittel (250) sind/ist.

10. Batteriemodul nach einem der vorhergehenden Ansprüche, wobei das untere Element (120a, 320a) aus Kunststoff besteht und/oder das obere Element (120b, 320b) aus einem Metall besteht.

11. Batteriemodul nach einem der vorhergehenden Ansprüche, wobei das Rohr (110, 310) aus zumindest einem von Kupfer, Aluminium und rostfreiem Stahl besteht.

12. Batteriemodul nach einem der vorhergehenden Ansprüche, wobei das Rohr (110) eine Abtrennung (111) in einem inneren Abschnitt davon aufweist und durch die Abtrennung (111) eine Vielzahl des Strömungswegs (112) am inneren Abschnitt des Rohrs (110) ausgebildet wird.

13. Batterie, aufweisend zumindest zwei Batteriemodule (60a, 60b) nach einem der Ansprüche 1 bis 9, wobei ein Verbindungselement (460) das Wärmeaustauschelement eines ersten Batteriemoduls (60a) mit dem Wärmeaustauschelement eines zweiten Batteriemoduls (60b) verbindet.

## Revendications

1. Module de batterie (20) comprenant :
une pluralité d'éléments de batterie prismatiques (10) reliés électriquement et agencés ensemble dans une première direction ; et
un élément d'échange de chaleur (100, 300) supportant des surfaces de fond (17) des éléments de batterie (10), l'élément d'échange de chaleur (100, 300) comportant un élément inférieur (120a, 320a), un élément supérieur (120b, 320b) réalisé en un matériau conducteur de chaleur et faisant face aux surfaces de fond (17) et, pour chacun des éléments de batterie (10), un tube aplati correspondant (110, 210, 310) interposé entre les éléments inférieur et supérieur (120a, 320a ; 120b, 320b) et ayant une surface supérieure faisant face à la surface de fond de l'élément de batterie respectif (10), une superficie de la surface supérieure étant égale à la superficie de la surface de fond de l'élément de batterie respectif (10), la surface de fond de l'élément de batterie respectif étant superposée à la surface supérieure.

2. Module de batterie de la revendication 1, dans lequel l'élément d'échange de chaleur (100, 300) comprend :
un premier distributeur (130, 330) comprenant une pluralité d'ouvertures (133, 333) ; et
un deuxième distributeur (140, 340) comportant une pluralité d'ouvertures (143, 343).

3. Module de batterie de la revendication 2, dans lequel la pluralité de tubes (110, 310) est interposée entre les premier et deuxième distributeurs (130, 330 ; 140, 340) et reliant les ouvertures (133, 333 ; 143, 343) des premier et deuxième distributeurs (130, 330 ; 140, 340), les tubes (110, 310) étant agencés dans une deuxième direction perpendiculaire à la première direction.

4. Module de batterie de la revendication 2 ou 3, dans lequel :
le premier distributeur (130, 330) comporte une entrée (131, 331) pour un agent d'échange de chaleur ; et
le deuxième distributeur (140, 340) comporte une sortie (141, 341) pour l'agent d'échange de chaleur.

5. Module de batterie de l'une des revendications 2 à 4, dans lequel :
le premier distributeur (130, 330) est prévu sur l'élément inférieur (120a) et s'étend dans la première direction ; et
le deuxième distributeur (140, 340) est prévu sur l'élément inférieur (120a) opposé au premier distributeur (130, 330).

6. Module de batterie de l'une des revendications précédentes, dans lequel l'élément inférieur (320a) comporte une partie de base (321) et une paire de parties de support (322) faisant saillie parallèlement aux éléments de batterie (10) à des côtés opposés de la partie de base (321).

7. Module de batterie de la revendication 6, dans lequel les tubes (310) sont agencés en parallèle les uns par rapport aux autres entre la paire de parties de support (322).

8. Module de batterie de la revendication 6 ou 7, dans lequel une hauteur (S) de la paire de parties de support (322) et une hauteur (T) des premier et deuxième distributeurs (330, 340) sont supérieures à celle d'une somme du tube (310) et de l'élément supérieur (320b).

9. Module de batterie de l'une des revendications précédentes, dans lequel l'élément inférieur (120a, 320a) et/ou l'élément supérieur (120b, 320b) est/sont une plaque ou une charge (250).

10. Module de batterie de l'une des revendications précédentes, dans lequel l'élément inférieur (120a, 320a) est réalisé en matière plastique et/ou l'élément supérieur (120b, 320b) est/sont réalisé(s) en un métal.

11. Module de batterie de l'une des revendications précédentes, dans lequel le tube (110, 310) est réalisé en au moins l'un parmi le cuivre, l'aluminium et l'acier inoxydable.

12. Module de batterie de l'une des revendications précédentes, dans lequel le tube (110) comporte une cloison (111) dans une partie interne de celui-ci et une pluralité de chemins d'écoulement (112) formés au niveau de la partie interne du tube (110) par la cloison (111).

13. Batterie comportant au moins deux modules de batterie (60a, 60b) selon l'une des revendications 1 à 9, dans laquelle un élément de liaison (460) relie l'élément d'échange de chaleur d'un premier module de batterie (60a) à un élément d'échange de chaleur d'un deuxième module de batterie (60b).
